# EUROPÄISCHE PATENTSCHRIFT

(11) **EP 3 039 393 B1**
(45) Veröffentlichungstag und Bekanntmachung des Hinweises auf die Patenterteilung: **06.02.2019**
(21) Anmeldenummer: 14741297.7
(22) Anmeldetag: 18.07.2014
(51) Int. Cl.: G01L 27/00, G01L 5/00, B60R 21/0136

(54) **VERFAHREN, VORRICHTUNG UND SYSTEM ZUR ÜBERPRÜFUNG EINER VORRICHTUNG FÜR EIN FAHRZEUG ZUR DETEKTION EINES AUFPRALLS**
METHOD, DEVICE AND SYSTEM FOR CHECKING A DEVICE FOR A VEHICLE FOR DETECTING AN IMPACT
PROCÉDÉ, DISPOSITIF ET SYSTÈME DE VÉRIFICATION D'UN DISPOSITIF DE DÉTECTION DE COLLISION DESTINÉ À UN VÉHICULE

(30) Priorität: 30.08.2013 DE 102013217340
(43) Veröffentlichungstag der Anmeldung: 06.07.2016
(73) Patentinhaber: Robert Bosch GmbH, 70442 Stuttgart (DE)
(72) Erfinder: WALZ, Michel, 72800 Eningen (DE); HERRMANN, Alexander, 72764 Reutlingen (DE); MADER, Denis, Suzhou 215021 (CN); LANG, Gunther, 70563 Stuttgart (DE); HILD, Hansjoerg Markus, Plymouth 48170 (US); SCHOENFELD, Daniel, 74232 Abstatt (DE); SCHMID, Michael, 70806 Kornwestheim (DE)
(86) Internationale Anmeldenummer: PCT/EP2014/065496
(87) Internationale Veröffentlichungsnummer: WO 2015/028199

(56) Entgegenhaltungen:
- DE-A1- 10 232 523
- DE-A1-102011 011 963
- DE-A1-102011 083 027

## Beschreibung

Die vorliegende Erfindung betrifft ein Verfahren zur Überprüfung einer Vorrichtung für ein Fahrzeug zur Detektion eines Aufpralls sowie eine dazu passende Vorrichtung.

Fußgänger und Fahrradfahrer sind im täglichen Straßenverkehr besonders gefährdet. Die Zahl der Verletzten und Toten ist vergleichsweise hoch. Um diese Zahl zu reduzieren, wurde eine entsprechende Gesetzgebung zum Schutze der Fußgänger und Radfahrer erlassen. Das Ziel: Das Fahrzeug muss eine entsprechende Schutzzone bereitstellen und die Aufprallenergie bei der Kollision absorbieren bzw. reduzieren. Eine effiziente Lösung bietet der aktive Fußgänger schütz, welcher den Aufprall durch Sensoren detektiert und entsprechende Personenschutzmittel, wie das Anheben der Motorhaube oder Außenairbags, auslöst.

Ein Sensor zur Detektion eines Aufpralls basiert auf der Erkennung einer Druckänderung in einem Schlauchsystem mit einem oder mehreren Drucksensoren. Das System wird im oder an dem vorderen bzw. hinteren Stoßfänger des Fahrzeugs verbaut. Eine Deformation des Stosßfängers bei einem Anprall eines Fußgängers führt zu einer Volumenänderung und damit zu Druckänderung im Schlauchsystem. Die Druckänderung wird von dem Drucksensor erfasst und als Anprallinformation an ein Steuergerät zur Aktivierung von Personenschutzmittel zur Verfügung gestellt.

### Stand der Technik

Zur Detektion von Aufprallen, insbesondere von Fußgängern, auf Fahrzeuge werden verschiedenste Systeme eingesetzt. Die bekanntesten Systeme setzen beschleunigungsmessende Sensoren ein, die im Front- bzw. Heckbereich eines Fahrzeugs angeordnet sind. Neuere Systeme setzen ein mit einem fluiden Medium gefüllten Schlauch ein, an dessen mindestens einem Ende ein druckmessender Sensor angeordnet ist.

Da es sich bei Systemen zur Detektion von Aufprallen um sicherheitskritische Systeme handelt ist es unumgänglich Verfahren zur Überprüfung dieser Systeme einzusetzen.

### Einfügeseite

Aus der DE 102 32 523 A1 ist eine Testdruckerzeugungseinrichtung an einem Unfallsensor eines Kraftfahrzeugs, der einen langgestreckten, zumindest bereichsweise elastischen Hohlkörper aufweist, an dessen Hohlraum ein Drucksensor angeschlossen ist, der nach dem Erreichen eines vorgegebenen Drucks im Hohlraum eine Schutzeinrichtung aktiviert. An den Hohlraum oder an einem elastischen Bereich des Hohlkörpers ist eine Druckerzeugungseinrichtung angeschlossen, die manuell oder automatisch aktivierbar ist und aktiviert den Druck im Hohlraum des betreffenden Hohlkörpers erhöht, wobei entweder vor oder bei der Aktivierung der Druckerzeugungseinrichtung die Schutzeinrichtung manuell oder automatisch wirkungslos gesetzt ist oder der Druck auf einen Wert unterhalb des vorgegebenen Drucks erhöht wird.

Aus der DE 10 2011 083 028 A1 ist eine Vorrichtung zur Erfassung des Aufpralls eines Objekts auf ein Fahrzeug bekannt, welche eine mit einem Befüllmedium befülken Schlauch umfasst, der ein erstes Ende und ein dem ersten Ende gegenüberliegendes zweites Ende aufweist. Ferner umfasst die Vorrichtung einen ersten Drucksensor, der mit dem ersten Ende des Schlauches und einen zweiten Drucksensor, der mit dem zweite Ende des Schlauches verbunden ist, wobei der erste und der zweite Drucksensor jeweils ein den Druck des Befüllmediums repräsentierendes Signal bereitstellen. Eine Recheneinheit ist über Anschlussleitungen mit dem ersten und dem zweiten Drucksensor zum Austausch von Daten verbunden, wobei die Recheneinheit zur Verarbeitung der von dem ersten und dem zweiten Drucksensor empfangenen Signale ausgebildet ist. Der Schlauch ist gegenüber der Umgebung und dem ersten und dem zweiten Drucksensor abgedichtet, so dass der in dem Schlauch herrschende innendruck des Befüllmediums unabhängig von einem Umgebungsdruck und dadurch abhängig von einer Temperatur schwankt. Die Recheneinheit ist dazu ausgebildet, temperaturbedingte Änderungen des Innendrucks im Betrieb des Fahrzeugs als Kriterium für die Diagnose der Funktionsfähigkeit der Vorrichtung zu verarbeiten.

Weiterer Stand der Technik ist der DE 10 2011 011 963 A1 zu entnehmen, die einen Aufprallsensor mit einem etastisch deformierbaren Schlauch und zumindest einem Drucksensor offenbart.

Aus der DE 102 32 523 A1 ist eine Testdruckerzeugungseinrichtung an einem Unfallsensor eines Kraftfahrzeugs bekannt, der einen langgestreckten, zumindest bereichsweise elastischen Hohlkörper aufweist, an dessen Hohlraum ein Drucksensor angeschlossen ist, der nach dem Erreichen eines vorgegebenen Drucks im Hohlraum eine Schutzeinrichtung aktiviert. An den Hohlraum oder an einem elastischen Bereich des Hohlkörpers ist eine Druckerzeugungseinrichtung angeschlossen, die manuell oder automatisch aktivierbar ist und aktiviert den Druck im Hohlraum des betreffenden Hohlkörpers erhöht, wobei entweder vor oder bei der Aktivierung der Druckerzeugungseinrichtung die Schutzeinrichtung manuell oder automatisch wirkungslos gesetzt ist oder der Druck auf einen Wert unterhalb des vorgegebenen Drucks erhöht wird.

Aus der DE 10 2011 083 028 A1 ist eine Vorrichtung zur Erfassung des Aufpralls eines Objekts auf ein Fahrzeug bekannt, welche eine mit einem Befüllmedium befüllten Schlauch umfasst, der ein erstes Ende und ein dem ersten Ende gegenüberliegendes zweites Ende aufweist. Ferner umfasst die Vorrichtung einen ersten Drucksensor, der mit dem ersten Ende des Schlauches und einen zweiten Drucksensor, der mit dem zweiten Ende des Schlauches verbunden ist, wobei der erste und der zweite Drucksensor jeweils ein den Druck des Befüllmediums repräsentierendes Signal bereitstellen. Eine Recheneinheit ist über Anschlussleitungen mit dem ersten und dem zweiten Drucksensor zum Austausch von Daten verbunden, wobei die Recheneinheit zur Verarbeitung der von dem ersten und dem zweiten Sensor empfangenen Signale ausgebildet ist. Der Schlauch ist gegenüber der Umgebung und dem ersten und dem zweiten Drucksensor abgedichtet, so dass der in dem Schlauch herrschende Innendruck des Befüllmediums unabhängig von einem Umgebungsdruck und dadurch abhängig von einer Temperatur schwankt. Die Recheneinheit ist dazu ausgebildet, temperatur bedinge Änderungen des Innendrucks im Betrieb des Fahrzeugs als Kriterium für die Diagnose der Funktionsfähigkeit der Vorrichtung zu verarbeiten.

Weiterer Stand der Technik ist der DE 10 2011 011 963 A1 zu entnehmen, die einen Aufprallsensor mit einem elastisch deformierbaren Schlauch und zumindest einem Drucksensor offenbart.

### Offenbarung der Erfindung

Vor diesem Hintergrund wird mit der vorliegenden Erfindung ein Verfahren zur Überprüfung einer Vorrichtung für ein Fahrzeug zur Detektion eines Aufpralls, insbesondere eines Fußgängeraufpralls, mittels mindestens eines auf mindestens einem ersten Volumen basierenden, insbesondere mittels eines auf mindestens einem Schlauch basierenden, Aufprallerfassungsmittels sowie eine Vorrichtung mit Mittel zur Durchführung eines solchen Verfahrens vorgestellt. Vorteilhafte Ausgestaltungen ergeben sich aus den Unteransprüchen und der nachfolgenden Beschreibung.

Die vorliegende Erfindung stellt eine einfache Realisierung der Überprüfungsfunktionalität einer Vorrichtung zur Detektion von Aufprallen dar.

Es wird daher ein Verfahren zur Überprüfung einer Vorrichtung für ein Fahrzeug zur Detektion eines Aufpralls, insbesondere eines Fußgängeraufprall, mittels mindestens eines auf mindestens einem ersten Volumen basierenden, insbesondere mittels eines auf mindestens einem Schlauch basierenden, Aufprallerfassungsmittels vorgestellt, wobei mindestens eine erste Größe erfasst wird, wobei die mindestens eine erste Größe einen Druck und/oder ein Volumen und/oder eine Druckänderung und/oder Volumenänderung in dem ersten Volumen repräsentiert und ein Ergebnis der Überprüfung der Vorrichtung in Abhängigkeit von einem Verlauf der mindestens einen ersten Größe ermittelt wird.

Weiterhin wird eine Vorrichtung mit Mitteln zum Durchführen eines solchen Verfahrens vorgestellt.

Unter dem ersten Volumen kann beispielsweise ein Hohlraum in einer Stoßstange eines Fahrzeugs, beispielsweise in dem Absorberschaum des Fahrzeugs, verstanden werden. Effektiver wird das Volumen durch einen Schlauch gebildet, der in bzw. an der vorderen bzw. hinteren Stoßstange eines Fahrzeugs angebracht ist. Der Schlauch kann beispielsweise in eine Nut in dem Absorberschaum angebracht sein. Bevorzugt besteht der Schlauch aus einem gegenüber Umwelteinflüssen beständigen Material wie beispielsweise Silikon. Es ist ausreichend, wenn der Schlauch mit Luft gefüllt ist. Wahlweise kann der Schlauch auch mit einem anderen Fluid, wie einem Gas oder einer Flüssigkeit gefüllt werden.

Mittels einer geeigneten Erfassungseinrichtung, beispielsweise einem Drucksensor, kann eine Größe erfasst werden, die einen Druck bzw. ein Volumen bzw. eine Druckänderung bzw. eine Volumenänderung in dem mindestens einen ersten Volumen repräsentiert. Wird diese Größe in zeitlicher Abfolge mehrmals erfasst, kann daraus ein Verlauf der Größe ermittelt werden. Dieser Verlauf kann geeignet ausgewertet werden. Abhängig von dem Verlauf der Größe kann ein Ergebnis der Überprüfung der Vorrichtung ermittelt werden. Nimmt beispielsweise die erfasste Größe über einen gegebenen Zeitraum schneller ab, als vorgesehen, kann darauf geschlossen werden, dass das Volumen bzw. der Schlauch eine Leckage aufweist.

In einer vorteilhaften Ausgestaltung des Verfahrens wird die mindestens eine erste Größe von mindestens einer ersten Erfassungseinrichtung erfasst, wobei die mindestens eine erste Erfassungseinrichtung sowohl mit dem mindestens einem ersten Volumen als auch mit einer Umgebung des Fahrzeugs kommuniziert, wobei die Kommunikation mit der Umgebung über ein Ausgleichsmittel stattfindet und dass der Verlauf der mindestens einen ersten Größe mit einem Sollverlauf verglichen wird, wobei der Sollverlauf abhängig von dem Ausgleichsmittel ist und dass das Ergebnis der Überprüfung der Vorrichtung in Abhängigkeit von dem Vergleich ermittelt wird.

Um das Verfahren robuster gegenüber Änderungen in den Umweltbedingungen, wie Änderung der Temperatur und Änderung des Luftdrucks zu machen, ist es sinnvoll die Bedingungen, die in dem Volumen bzw. dem Schlauch vorherrschen an die Umweltbedingungen anzupassen. Dazu kann ein Ausgleichsmittel, wie beispielsweise ein Druckausgleichselement, genutzt werden. Ein Druckausgleichselement wird typischerweise an der Erfassungseinrichtung, beispielsweise dem Drucksensor, angebracht. Zusätzlich oder alternativ kann das Ausgleichsmittel auch an dem Schlauch angebracht sein, der das erste Volumen bereitstellt. Ein Druckausgleichselement verbindet zwei Volumina, sodass die Bedingungen in dem ersten Volumen über eine gewisse Zeit an die Bedingungen in dem zweiten Volumen angeglichen werden. Die gewisse Zeit, die dazu notwendig ist, wird maßgeblich von der Regelrate des Ausgleichsmittels, der Größe des Ausgleichsmittels und den Bedingungsunterschieden in den Volumina bestimmt. Sind diese Größen bekannt, so kann der Verlauf der erfassten Größe mit einem Sollverlauf, der abhängig von den eben beschriebenen Eigenschaften des Ausgleichsmittels ist, verglichen werden.

Steigt beispielsweise aufgrund einer Temperaturerhöhung der Druck in dem Schlauch, so findet ein Druckausgleich über das Ausgleichsmittel mit der Umgebung des Fahrzeugs statt. Abhängig von den Eigenschaften des verwendeten Ausgleichsmittels findet der Ausgleich in einem Sollverlauf statt. Findet ein Ausgleich dabei schneller statt, so kann auf eine Leckage in dem Schlauch geschlossen werden. Findet ein Ausgleich langsamer statt, so kann auf eine Verstopfung geschlossen werden.

In einer vorteilhaften Ausgestaltung des Verfahrens wird mindestens eine zweite Größe erfasst, wobei die mindestens eine zweite Größe einen Druck bzw. ein Volumen bzw. eine Druckänderung bzw. Volumenänderung in dem mindestens einen ersten Volumen repräsentiert und die mindestens eine erste Größe wird mittels der mindestens einen zweiten Größe plausibilisiert, insbesondere unter Anwendung von zumindest einer Zustandsgleichung für ideale Fluide bzw. die mindestens eine erste Größe wird mit der mindestens einen zweiten Größe korreliert und das Ergebnis der Überprüfung der Vorrichtung wird in Abhängigkeit von der Plausibilisierung bzw. der Korrelation ermittelt. Die zwei erfassten Größen können dann durch Anwendung der Zustandsgleichung für ideale Fluide (thermische Zustandsgleichung idealer Gase) plausibilisiert werden. Dabei werden die zwei erfassten Größen mit der Annahme verarbeitet, dass in dem ersten Volumen eine homogene Druck- und Temperaturverteilung vorherrscht.

Die zwei erfassten Größen korrelieren, wenn sie sich passend zu einander verhalten. Darunter kann verstanden werden, wenn sich eine der beiden erfassten Größen ändert, dass dann die Verläufe der zwei erfassten Größen im gleichen Maße zunehmen bzw. abnehmen.

Auf diese Weise besteht eine einfache Möglichkeit die Vorrichtung zur Detektion von Aufprallen zu überprüfen ohne bspw. auf dritte Größen zurückgreifen zu müssen.

In einer vorteilhaften Ausgestaltung des Verfahrens wird die mindestens eine erste Größe von einer ersten Erfassungseinrichtung erfasst und die mindestens eine zweite Größe von einer zweiten Erfassungseinrichtung erfasst, wobei die erste und zweite Erfassungseinrichtung separate Erfassungseinrichtungen sind und die erste Erfassungseinrichtung und die zweite Erfassungseinrichtung jeweils mit dem mindestens einen ersten Volumen kommunizieren.

Die Überprüfung der Vorrichtung kann verbessert werden, wenn an dem Volumen bzw. dem Schlauch eine von der ersten Erfassungseinrichtung separate zweite Erfassungseinrichtung angebracht wird. In einer Ausführungsform mit einem Schlauch kann dies beispielsweise dadurch geschehen, dass je ein Drucksensor an je einem Ende des Schlauchs angebracht wird.

Dadurch wird erreicht, dass eine fehlerhaft arbeitende Erfassungseinrichtung einfacher erkannt werden kann und nicht zu Fehlfunktionen des Systems führt.

In einer vorteilhaften Ausgestaltung des Verfahrens wird mindestens eine dritte Größe erfasst, wobei die mindestens eine dritte Größe einen Druck bzw. eine Druckänderung bzw. eine Temperatur bzw. eine Temperaturänderung, insbesondere der Umgebung des Fahrzeugs, bzw. eine Höhe, in der sich das Fahrzeug befindet, bzw. eine Höhenänderung, die das Fahrzeug vornimmt, repräsentiert, wobei die mindestens eine dritte Größe von einer dritten Erfassungseinrichtung erfasst wird und dass die mindestens eine erste Größe bzw. die mindestens eine zweite Größe mit der mindestens einen dritten Größe korreliert werden und dass das Ergebnis der Überprüfung in Abhängigkeit von der Korrelation ermittelt wird.

In einer weiterhin vorteilhaften Ausgestaltung des Verfahrens handelt es sich bei der dritten Erfassungseinrichtung um eine separate Erfassungseinrichtung.

Die mindestens eine dritte Größe kann dabei bspw. von einem sogenannten Kombiinstrument oder einem Seitendrucksensor, bspw. zur Erfassung von seitlichen Aufprallen, geliefert werden. Dabei wird die Größe von dem Kombiinstrument oder dem Seitendrucksensor erfasst oder zumindest aggregiert und dann über ein Kommunikationsmittel im Fahrzeug wie bspw. dem CAN-Bus oder dem Flex-Ray-Bus dem Verfahren bzw. der Vorrichtung, die das Verfahren durchführt, zur Verfügung gestellt.

Bei der erfassten Temperatur bzw. Temperaturänderung kann es sich neben der Temperatur in der Umgebung des Fahrzeugs auch um die Temperatur im Motorraum handeln. Das ist darauf zurückzuführen, dass die durch das erfindungsgemäße Verfahren zu überprüfende Vorrichtung zur Detektion eines Aufpralls in oder an dem Stoßfänger eines Fahrzeugs angebracht ist und damit in der Nähe des Ölkühlers vorbeigeführt werden kann. Der Ölkühler strahlt im Betrieb des Fahrzeugs Temperatur in einer Weise ab, dass durch den Anstieg der Temperatur bereits das erfindungsgemäße Verfahren durchgeführt werden kann.

Bei den erfassten Drücken der Umgebung bzw. Druckänderungen in der Umgebung des Fahrzeugs kann es sich um künstlich herbeigeführte Drücke bzw. Druckänderungen handeln. Diese können gezielt in Testlaboren, Werkstätten oder Waschstraßen oder der gleichen herbeigeführt werden. Eine kostengünstige Variante ist eine Herbeiführung durch verschiedene Fahrsituationen. Bspw. durch das Fahren in verschiedenen Höhen. Dabei wird der Umstand ausgenutzt, dass der Umgebungsdruck immer kleiner wird, umso höher sich ein Fahrzeug befindet.

In einer vorteilhaften Ausgestaltung des Verfahrens wird auf die mindestens eine erste Größe bzw. auf die mindestens eine zweite Größe ein Korrekturfaktor angewendet, der von der mindestens einen dritten Größe abhängig ist.

Durch eine solche Ausgestaltung des Verfahrens können ungewünschte Temperatur bzw. Druckeinflüsse auf die zu überprüfende Vorrichtung kompensiert werden und das erfindungsgemäße Verfahren bzw. das erfindungsgemäße System kann dadurch genauer oder zumindest robuster gestaltet werden.

In einer alternativen Ausgestaltung des Verfahrens wird als das Ergebnis der Überprüfung eine Leckage oder eine Verstopfung des mindestens einen ersten Volumens ermittelt.

In einer vorteilhaften Ausgestaltung des Verfahrens wird die Leckage bzw. die Verstopfung ermittelt, wenn die mindestens eine erste Größe bzw. die mindestens eine zweite Größe nicht in einem vorbestimmten Rahmen mit der mindestens einen dritten Größe korrelieren.

Eine Leckage kann bspw. dadurch erkannt werden, dass sich eine Änderung der dritten Größe nicht im entsprechend bzw. erwarteten Maße auf Änderungen der ersten bzw. zweiten Größe auswirkt. Bspw., dass zwar die Temperatur steigt, die erfassten Drücke allerdings nicht oder nur wesentlich geringer steigen, da durch eine vorhandene Leckage ein zu schneller bzw. nicht definierter Ausgleich mit dem Umgebungsdruck stattfindet. Steigen in Folge einer Temperaturänderung die erfassten Drücke wesentlich schneller und ggf. ungleich schnell, so lässt sich auf eine Verstopfung schließen, da ein wesentlich kleiner bzw. zwei ungleich große Volumina gemessen werden und sich äußere Temperaturänderungen proportional zum gemessenen Volumen auswirken. Dem zur Folge kann durch die vorteilhafte Ausgestaltung das Ergebnis der Überprüfung der Vorrichtung zur Detektion von Aufprallen wesentlich genauer bestimmt werden.

In einer vorteilhaften Ausgestaltung des Verfahrens korreliert die mindestens eine erste Größe bzw. die mindestens eine zweite Größe mit der mindestens einen dritten Größe, wenn nach Ablauf einer vorbestimmten Zeitdauer, wobei die Zeitdauer insbesondere abhängig von der mindestens einen dritten Größe bzw. dem Ausgleichsmittel ist, die mindestens eine erste Größe bzw. die mindestens eine zweite Größe im Wesentlichen in einem vorbestimmten Verhältnis zu der mindestens einen dritten Größe stehen.

Die mindestens eine erste Größe bzw. die mindestens eine zweite Größe folgt bei der Vorrichtung zur Detektion von Aufprallen, die durch das erfindungsgemäße Verfahren überprüft werden soll, der mindestens einen dritten Größe Bauart bedingt nach. Bauart bedingt daher, weil zwar das erste Volumen, das von der ersten bzw. der zweiten Größe erfasst wird, mit dem zweiten Volumen das von der dritten Größe erfasst wird, kommuniziert, allerdings über ein Ausgleichselement. Dieses Ausgleichselement führt dazu, dass Änderungen, die an der dritten Größe erfasst werden, sich erst zeitverzögert auf die mindestens eine erste bzw. mindestens eine zweite Größe auswirken. Dies bedeutet in der Folge, dass bspw. eine Leckage dazu führt, dass die mindestens eine erste bzw. zweite Größe schon vor Ablauf der vorbestimmten Zeitdauer mit der dritten Größe in einem vorbestimmten Verhältnis stehen kann. Da ein Ausgleich zwischen den zwei gemessenen Volumina über die Leckage schneller stattfinden kann. Daher führt diese vorteilhafte Ausgestaltung dazu, dass sogenannte False-Negative-Ergebnisse, d.h. es wird fälschlicherweise ein Fehler, bspw. eine Leckage oder eine Verstopfung erkannt, obwohl kein Fehler vorliegt, vermieden werden können und sogenannte Positive-False-Ergebnisse besser erkannt werden können. Eine niedrige False-Negative-Rate erhöht die Akzeptanz des Verfahrens beim Kunden und Verbraucher. Dies wird dadurch erreicht, dass die mindestens eine erste Größe bzw. die mindestens eine zweite Größe nach Ablauf einer vorbestimmten Zeitdauer, d.h. nicht sofort, mit der dritten Größe in einem vorbestimmten Verhältnis stehen müssen.

Das erfindungsgemäße Verfahren bzw. vorteilhafte Ausgestaltung des erfindungsgemäßen Verfahrens können zyklisch durchgeführt werden. Durch ein zyklische Durchführung kann die Robustheit des Systems erhöht werden, da das System regelmäßig und nicht etwa nur zu Beginn oder zum Ende oder nur während Werkstattaufenthalten des Fahrzeugs überprüft wird.

### Zeichnungen

Nachfolgend werden Ausführungsbeispiele der Erfindung anhand von Zeichnungen erläutert. Es zeigen
Fig. 1 eine Übersichtsdarstellung einer Ausführungsform einer Vorrichtung zur Detektion von Aufprallen
Fig. 2 eine Detailansicht einer erfindungsgemäßen Erfassungseinrichtung
Fig. 3 eine Integration einer Vorrichtung (12) zur Detektion von Aufprallen in die Front- bzw. Heckpartie (11a/11b) eines Fahrzeugs (1)
Fig. 4 die Darstellung einer Wirkkette
Fig. 5 ein Blockdiagramm einer Erfassungseinrichtung einer Vorrichtung zur Detektion von Aufprallen
Fig. 6 eine schematische Seitenansicht einer Erfassungseinrichtung einer Vorrichtung zur Detektion von Aufprallen
Fig. 7a ein Verlaufsdiagramm einer ersten bzw. zweiten Größe im Bezug auf eine dritte Größe
Fig. 7b ein weiteres Verlaufsdiagramm einer ersten bzw. zweiten Größe im Bezug auf eine dritte Größe
Fig. 8 ein Blockdiagramm des erfindungsgemäßen Verfahrens Beschreibung von Ausführungsbeispielen

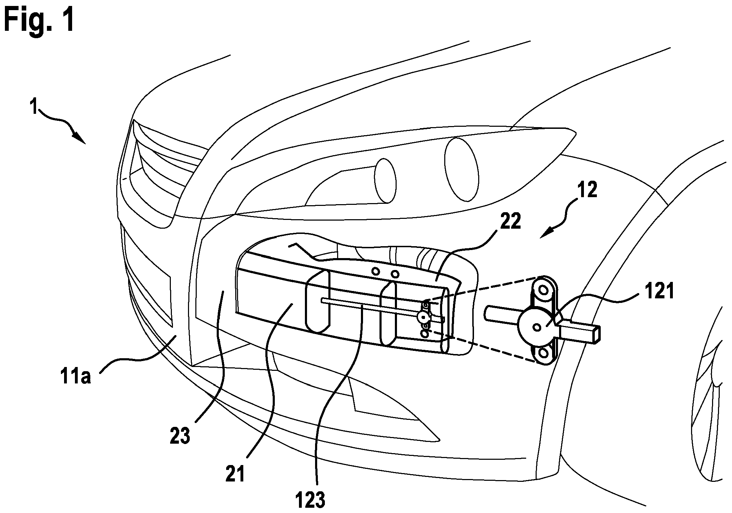

Fig.1 zeigt die Frontpartie eines Fahrzeugs (1) in bzw. an dessen vorderem Stoßfänger (11a) eine Vorrichtung (12) zur Detektion von Aufprallen angeordnet ist. Zu erkennen an der Vorrichtung (12) in der dargestellten Ausführungsform ist eine erste Erfassungseinrichtung (121) sowie ein erstes Volumen (V1) in Form eines Schlauchs (123).

Die erste Erfassungseinrichtung (121) ist dabei zusätzlich stark vergrößert dargestellt. Die erste (121) ist dabei an einem Ende des Schlauchs (123) angeordnet.

Es ist leicht nachvollziehbar, dass an dem anderen Ende des Schlauchs (123) eine zweite Erfassungseinrichtung (122) angeordnet sein kann.

Es ist leicht vorstellbar, dass die Vorrichtung (12) zur Detektion von Aufprallen auch in bzw. an dem hinteren Stoßfänger (11b) des Fahrzeugs (1) angebracht werden kann.

Eine nicht dargestellte Ausführungsform der Vorrichtung zur Detektion von Aufprallen umfasst lediglich eine Erfassungseinrichtung (121/122), die an einem der Enden des Schlauchs (123) angeordnet ist.

Eine weitere nicht dargestellte Ausführungsform der Vorrichtung zur Detektion von Aufprallen umfasst als das erste Volumen (V1) ein beliebig gestaltetes Volumen, bspw. einen beliebigen Hohlraum in dem vorderen (11a) oder hinterem (11b) Stoßfänger.

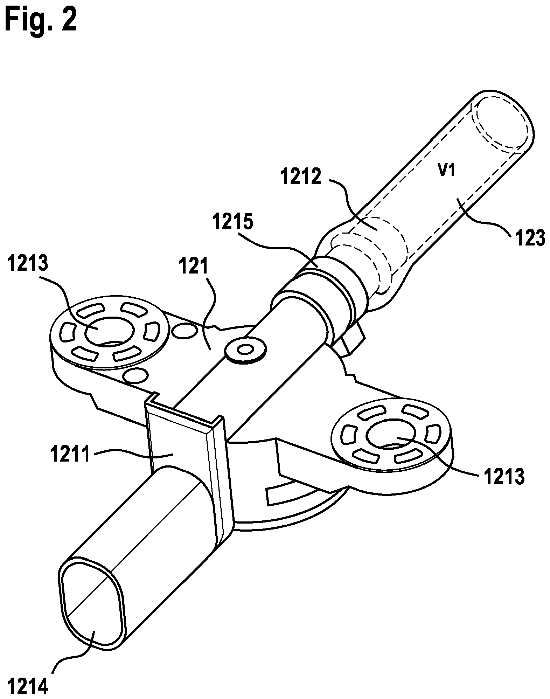

Fig. 2 zeigt eine Detailansicht der erfindungsgemäßen Erfassungseinrichtung (121/122). Es ist deutlich zu erkennen, dass das erste Volumen (V1) in Form eines Schlauchs (123), an einem Fortsatz (1212) des Gehäuses (1211) der Erfassungseinrichtung (121/122) angebracht ist. In der dargestellten Ausführungsform ist der Schlauch (123) mit einem Binder (1215) befestigt. Das Gehäuse (1211) weist darüber hinaus Befestigungsschellen (1213) auf, mittels derer die Erfassungseinrichtung (121/122) an dem Fahrzeug (1) angebracht werden können. Deutlich zu erkennen ist auch der Steckeranschluss (1214) über den die Erfassungseinrichtung (121) mit einer Kommunikations- und Stromversorgungsverbindung verbunden werden kann. Typischerweise wird dabei auf standardisierte Anschlüsse wie das PSI5, SPI, CAN oder Flex-Ray zurückgegriffen. Auch andere Kommunikations- bzw. Stromversorgungsverbindungen sind dabei denkbar.

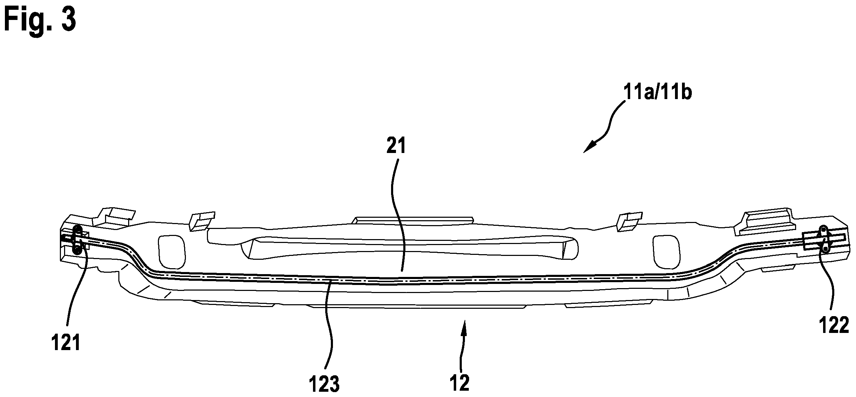

Fig. 3 zeigt die Integration einer Vorrichtung (12) zur Detektion von Aufprallen in die Front- bzw. Heckpartie (11a/11b) eines Fahrzeugs (1). An jeweils einem Ende des ersten Volumens (V1) in Form eines Schlauchs (123) sind Erfassungseinrichtungen (121/122) angeordnet. Der Schlauch (123) verläuft in einer Nut des Absorberschaums (21). Auch die Erfassungseinrichtungen (121/122) sind in speziellen Aushebungen des Fußgängerschaums (21) angeordnet.

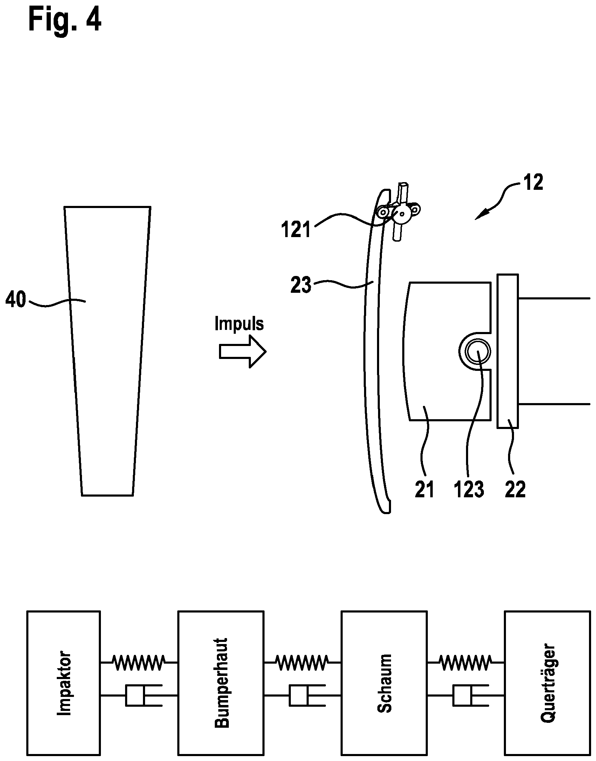

Fig. 4 zeigt die Darstellung einer Wirkkette vom Impaktor bis zum Querträger (22) des Fahrzeugs (1). Der dargestellte Impaktor steht stellvertretend für das Objekt, das auf das Fahrzeug (1) trifft bzw. von diesem getroffen wird. Die Bumper-Haut (23) ist Teil der äußeren Hülle des Fahrzeugs (1). Dahinter folgt der Absorberschaum (21) und schließlich der Querträger (22) des Fahrzeugs (1). Wie dargestellt stellt jedes Element in der Wirkkette ein eigenes Federmassesystem darf.

Der Impuls, der durch den Aufprall des Impaktor (40) auf das Fahrzeug (1) im Gesamten einwirkt läuft über die Bumperhaut (23) zum Absorberschaum (21). Im bzw. an dem Absorberschaum ist die erfindungsgemäße Vorrichtung (12) angeordnet. Der Impuls wird sich über den Absorberschaum (21) auch auf den Schlauch (123) der Vorrichtung (12) aus und wird von der bzw. den Erfassungseinrichtungen (121/122) erfasst. Je nach Stärke und Ausprägung des Impulses wird die Art des Impaktors detektiert und geeignete Schutzmaßnahmen ausgeführt bzw. angesteuert. Wenn es Fußgänger getroffen wird, ist es das Ziel Verletzungen des Fußgängers weitest gehend zu vermeiden.

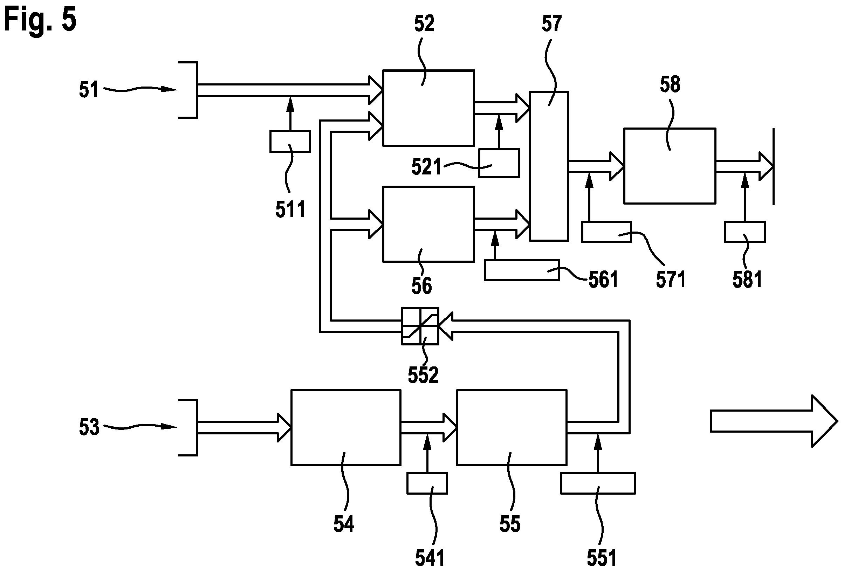

Fig. 5 zeigt ein Blockdiagramm einer Erfassungseinrichtung (121, 122) einer Vorrichtung zur Detektion von Aufprallen. Die zweistelligen Bezugszeichen stellen in diesem Diagramm Verarbeitungsschritte, insbesondere Digitalisierungsschritte, dar. Die dreistelligen Bezugszeichen stellen Zwischenwerte dar, die von einem Verarbeitungsschritt zum nächsten Verarbeitungsschritt weitergegeben werden. Die Erfassungseinrichtung (121, 122) weist dabei ein Sensorelement 51 zur Erfassung einer (physikalischen) Größe und eine Temperatur-Diode 53 auf. Die Temperatur-Diode 53 erfasst die interne Temperatur an bzw. in der Umgebung des Sensorelements 51. Die so erfasste Temperatur wird nachverarbeitet (54 bis 56 bzw. 52), insbesondere digitalisiert 552 und findet Einzug in die erfasste physikalische Größe 57 des Sensorelements 51. Die so nachverarbeitete Größe 58 wird an die an die Erfassungseinrichtung (121, 122) angeschlossenen Verarbeitungsvorrichtungen als die gemessene physikalische Größe repräsentierenden Werte 58 weitergegeben. Erfindungsgemäß wird von der Erfassungseinrichtung (121, 122) nunmehr neben den die gemessene physikalische Größe repräsentierenden Werten auch die erfasste interne Temperatur 55 an bzw. in der Umgebung des Sensorelements 51 an die an die Erfassungseinrichtung (121, 122) angeschlossene Verarbeitungsvorrichtungen weitergegeben. Der erfasste Temperaturwert 55 kann in einer Ausgestaltung des erfindungsgemäßen Verfahrens als dritte Größe verwendet werden.

Die Übertragung an die an die Erfassungseinrichtung (121, 122) angeschlossene Verarbeitungsvorrichtungen kann dabei über im Fahrzeug vorhandene Kommunikationsmittel, wie das standardisierten Übertragungsprotokoll PSI5 oder CAN bzw. Flex-Ray, stattfinden.

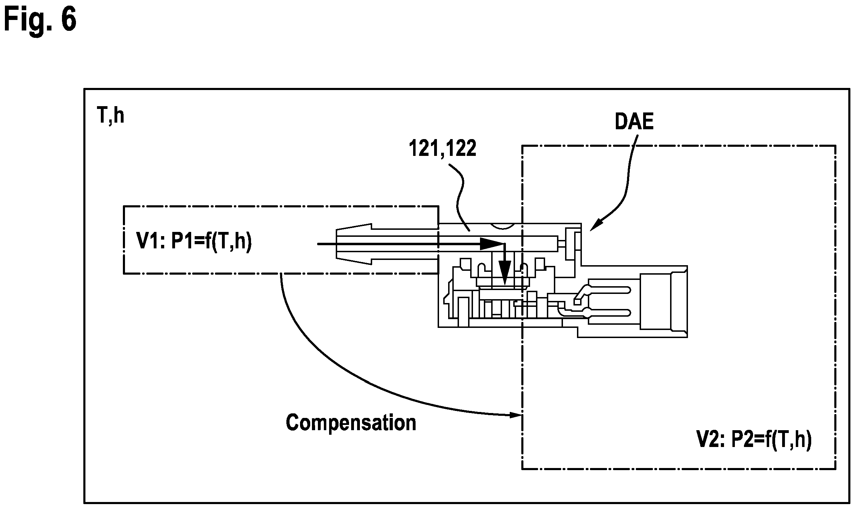

Fig. 6 zeigt eine schematische Seitenansicht einer Erfassungseinrichtung (121, 122) einer Vorrichtung zur Detektion von Aufprallen. Die Erfassungseinrichtung (121, 122) in der dargestellten Ausführungsform kommuniziert dabei mit einem ersten Volumen (V1), in dem ein Druck P1 abhängig von der vorherrschenden Temperatur T und der Höhe h, in der sich das erste Volumen V1 befindet, vorliegt. Des Weiteren kommuniziert die Erfassungseinrichtung über ein Druckausgleichselement DAE mit einem zweiten Volumen V2, in dem ein Druck P2 ebenfalls abhängig von der vorherrschenden Temperatur T und der Höhe h vorliegt. Beide Volumina V1, V2 sind dabei im Wesentlichen von der gleichen Temperatur T und Höhe h beeinflusst. Über das Druckausgleichselement DAE wird nach einer gewissen Zeit ein Ausgleich (Compensation) zwischen dem Druck P1 und P2 stattfinden. Die Geschwindigkeit des Ausgleichs ist dabei abhängig von dem Unterschied zwischen dem Druck P1 und Druck P2 und den Eigenschaften des Druckausgleichselements DAE.

Eine Ausgestaltung des erfindungsgemäßen Verfahrens macht sich diesen Zusammenhang zwischen dem Unterschied der Drücke P1 und P2 und den Eigenschaften des Druckausgleichselements zu Nutze, um die Vorrichtung zur Detektion von Aufprallen zu überprüfen.

Bspw. kann auf eine Leckage in dem Volumen bzw. dem Schlauch des schlauchbasierten Aufprallerfassungsmittels geschlossen werden, wenn die Geschwindigkeit bis ein Ausgleich zwischen dem Volumen V1 und dem Volumen V2 stattgefunden hat, nicht mit einer erwarteten Geschwindigkeit übereinstimmt. Die erwartete Geschwindigkeit ist dabei im Wesentlichen von dem Unterschied zwischen dem Druck P1 und P2 sowie den Eigenschaften des Druckausgleichselements DAE abhängig.

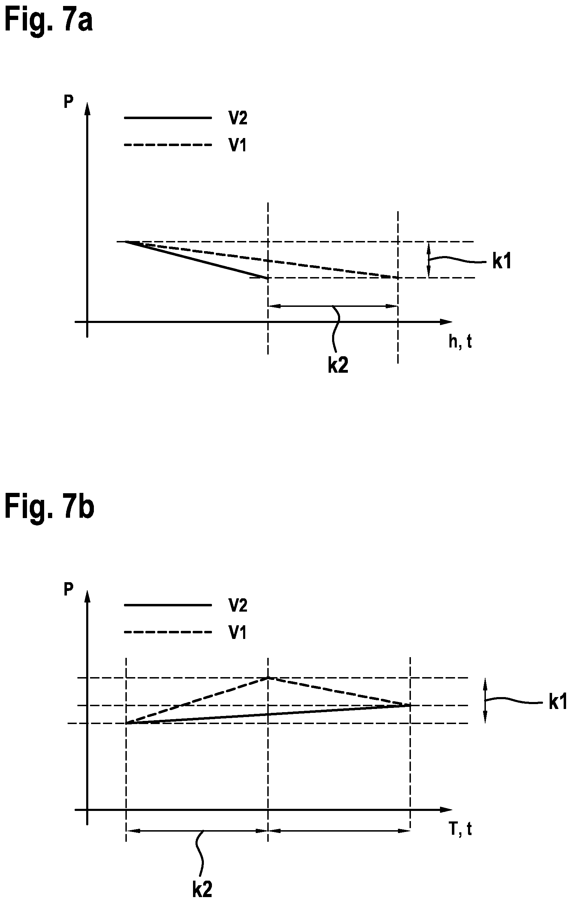

Fig. 7a zeigt ein Verlaufsdiagramm einer ersten bzw. einer zweiten Größe im Bezug auf eine dritte Größe. In dem Diagramm ist auf der Ordinate der Druck P aufgetragen und auf der Abszisse der Verlauf der Höhe h und der Zeit t aufgetragen. Der Verlauf der ersten bzw. zweiten Größe wird durch die Kennlinie V1 dargestellt. Der Verlauf der dritten Größe wird durch die Kennline V2 dargestellt. Dargestellt ist eine Situation, in der durch Zunahme der Höhe h, der Druck P im zweiten Volumen V2 abnimmt. Das zweite Volumen stellt im Bezug auf die vorliegende Erfindung die Umgebung des Fahrzeugs dar. Das Fahrzeug befindet sich demnach auf einer Bergauffahrt. Der verringerte Druck in der Umgebung des Fahrzeugs wirkt sich auf den Druck in dem ersten Volumen aus. Über das Druckausgleichselement findet ein Ausgleich mit einer definierten Geschwindigkeit statt. Die Geschwindigkeit k2 hängt dabei im Wesentlichen von dem Unterschied k1 zwischen dem Druck P(V1) im ersten Volumen V1 und dem Druck P(V2) im zweiten Volumen V2 ab.

Fig. 7b zeigt ein weiteres Verlaufsdiagramm einer ersten bzw. einer zweiten Größe im Bezug auf eine dritte Größe. In dem Diagramm ist auf der Ordinate der Druck P aufgetragen und auf der Abszisse der Verlauf der Temperatur T und der Zeit t aufgetragen. Der Verlauf der ersten bzw. zweiten Größe wird durch die Kennlinie V1 dargestellt. Der Verlauf der dritten Größe wird durch die Kennline V2 dargestellt. Dargestellt ist eine Situation, in der durch Zunahme der Temperatur T, der Druck P(V1) im ersten Volumen V1 schneller zunimmt als im zweiten Volumen V2. Das erste Volumen V1 stellt im Bezug auf die vorliegende Erfindung der Schlauch des schlauchförmigen Aufprallerfassungsmittel dar. Das zweite Volumen V2 stellt im Bezug die vorliegende Erfindung die Umgebung des Fahrzeugs dar. Dadurch, dass das erste Volumen V1 im Vergleich zum zweiten Volumen V2 wesentlich kleiner ist, ist klar, dass sich eine Temperaturänderung stärker auf den Druck P(V1) in dem ersten Volumen V1 auswirkt. In dem Diagramm ist dies deutlich an dem schnelleren Anstieg des Drucks P(V1) zu erkennen. Zeitgleich findet über das Druckausgleichselement ein Ausgleich mit dem Druck P(V2) des zweiten Volumens V2 statt. Dies wird durch den Knick in der Verlaufskurve von P(V2) deutlich. Schlussendlich wird nach Ablauf einer gewissen Zeit k2 ein vollständiger Ausgleich mit dem Druck im Volumen V1 und dem Druck im Volumen V2 stattgefunden haben.

Auch in diesem Fall ist die Zeit k2, die für einen Ausgleich zu erwarten ist, abhängig von dem Unterschied k1 zwischen dem Druck P(V1) und P(V2) und den Eigenschaften des Druckausgleichselements.

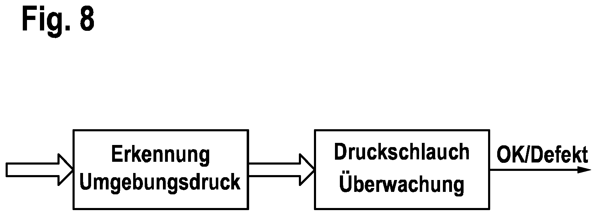

Fig. 8 zeigt ein Blockdiagramm einer Ausführungsform des erfindungsgemäßen Verfahrens. In einem ersten Schritt wird dabei eine Erkennung des Umgebungsdrucks durchgeführt. Diese Erkennung nimmt dann Einfluss auf die Druckschlauch Überwachung des schlauchförmigen Mittels zur Aufprallerkennung gemäß der vorliegenden Erfindung. Die Erkennung des Umgebungsdrucks - sprich im Bezug auf die vorligende Erfindung - die Erkennung des Drucks im zweiten Volumen (V2) entspricht demnach der Ermittlung der dritten Größe, die mit der erfassten ersten bzw. zweiten Größe im Rahmen des Verfahrens zur Überprüfung der Vorrichtung zur Detektion eines Aufpralls in Korrelation gebracht wird, um bspw. eine Leckage bzw. eine Verstopfung des schlauchförmigen Aufprallerkennungsmittels zu erkennen. Das Ergebnis dieser Überprüfung ist im Blockdiagramm mit dem Pfeil mit der Beschriftung "Ok/Defekt" dargestellt.

## Patentansprüche

1. Verfahren zur Überprüfung einer Vorrichtung (12) für ein Fahrzeug (1) zur Detektion eines Aufpralls, insbesondere eines Fußgängeraufprall, mittels mindestens eines auf mindestens einem ersten Volumen (V1) basierenden, insbesondere mittels eines auf mindestens einem Schlauch (123) basierenden, Aufprallerfassungsmittels, wobei
mindestens eine erste Größe erfasst wird, wobei
die mindestens eine erste Größe einen Druck und/oder ein Volumen und/oder eine Druckänderung und/oder Volumenänderung in dem ersten Volumen (V1) repräsentiert und
ein Ergebnis der Überprüfung der Vorrichtung in Abhängigkeit von einem Verlauf der mindestens einen ersten Größe ermittelt wird wobei die mindestens eine erste Größe von mindestens einer ersten Erfassungseinrichtung (121, 122) erfasst wird, wobei die mindestens eine erste Erfassungseinrichtung (121, 122) sowohl mit dem mindestens einem ersten Volumen (V1) als auch mit einer Umgebung des Fahrzeugs (V2) kommuniziert, wobei die Kommunikation mit der Umgebung über ein Ausgleichsmittel (DAE) stattfindet,
**dadurch gekennzeichnet,**
**dass** der Verlauf der mindesten einen ersten Größe mit einem Sollverlauf verglichen wird, wobei der Sollverlauf abhängig von dem Ausgleichsmittel (DAE) ist und dass das Ergebnis der Überprüfung der Vorrichtung (12) in Abhängigkeit von dem Vergleich ermittelt wird.

2. Verfahren nach Anspruch 1,
**dadurch gekennzeichnet, dass**
mindestens eine zweite Größe erfasst wird, wobei die mindestens eine zweite Größe einen Druck und/oder ein Volumen und/oder eine Druckänderung und/oder Volumenänderung in dem mindestens einen ersten Volumen (V1) repräsentiert und die mindestens eine erste Größe mittels der mindestens einen zweiten Größe plausibilisiert wird, insbesondere unter Anwendung von zumindest einer Zustandsgleichung für ideale Fluide und/oder dass die mindestens eine erste Größe mit der mindestens einen zweiten Größe korreliert wird und das Ergebnis der Überprüfung der Vorrichtung (12) in Abhängigkeit von der Plausibilisierung und/oder der Korrelation ermittelt wird.

3. Verfahren nach Anspruch 1 oder 2,
**dadurch gekennzeichnet, dass**
die mindestens eine erste Größe von einer ersten Erfassungseinrichtung (121) erfasst wird und die mindestens eine zweite Größe von einer zweiten Erfassungseinrichtung (122) erfasst wird, wobei die erste und zweite Erfassungseinrichtung (122) separate Erfassungseinrichtungen (122) sind und die erste Erfassungseinrichtung (121) und die zweite Erfassungseinrichtung (122) jeweils mit dem mindestens einen ersten Volumen (V1) kommunizieren.

4. Verfahren nach einem der vorhergehenden Ansprüche,
**dadurch gekennzeichnet, dass**
mindestens eine dritte Größe erfasst wird, wobei die mindestens eine dritte Größe einen Druck und/oder eine Druckänderung und/oder eine Temperatur und/oder eine Temperaturänderung, insbesondere der Umgebung des Fahrzeugs (V2), repräsentiert und/oder die dritte Größe eine Höhe, in der sich das Fahrzeug (1) befindet und/oder eine Höhenänderung, die das Fahrzeug (1) vornimmt, repräsentiert, wobei die mindestens eine dritte Größe von einer dritten Erfassungseinrichtung, insbesondere von einer separaten dritten Erfassungseinrichtung, erfasst wird und dass die mindestens eine erste Größe und/oder die mindestens eine zweite Größe mit der mindestens einen dritten Größe korreliert werden und dass das Ergebnis der Überprüfung in Abhängigkeit von der Korrelation ermittelt wird.

5. Verfahren nach Anspruch 4,
**dadurch gekennzeichnet, dass**
auf die mindestens eine erste Größe und/oder auf die mindestens eine zweite Größe ein Korrekturfaktor angewendet wird, wobei der Korrekturfaktor abhängig von der mindestens einen dritten Größe ist.

6. Verfahren nach einem der vorhergehenden Ansprüche,
**dadurch gekennzeichnet, dass**
als das Ergebnis der Überprüfung eine Leckage und/oder Verstopfung des mindestens einen ersten Volumens (V1) ermittelt wird.

7. Verfahren nach Anspruch 6,
**dadurch gekennzeichnet, dass**
die Leckage und/oder die Verstopfung ermittelt werden, wenn die mindestens eine erste Größe und/oder die mindestens eine zweite Größe nicht in einem vorbestimmten Rahmen (k1, k2) mit der mindestens einen dritten Größe korrelieren.

8. Verfahren nach Anspruch 7,
**dadurch gekennzeichnet, dass**
die mindestens eine erste Größe und/oder die mindestens eine zweite Größe mit der mindestens einen dritte Größe korrelieren, wenn nach Ablauf einer vorbestimmten Zeitdauer (k2), wobei die Zeitdauer insbesondere abhängig von der mindestens einen dritten Größe und/oder dem Ausgleichsmittel (DAE) ist, die mindestens eine erste Größe und/oder die mindestens eine zweite Größe im Wesentlichen in einem vorbestimmten Verhältnis zu der mindestens einen dritten Größe stehen.

9. Vorrichtung mit Mitteln zum Durchführen eines Verfahrens nach einem der Ansprüche 1 bis 8.

## Claims

1. Method for checking a device (12) for a vehicle (1) for the detection of an impact, in particular of a pedestrian impact, by means of at least one impact detection means based on at least one first volume (V1), in particular based on at least one hose (123), wherein at least one first variable is detected, wherein the at least one first variable represents a pressure and/or a volume and/or a change of pressure and/or change of volume in the first volume (V1) and a result of the checking of the device is determined depending on a profile of the at least one first variable, wherein the at least one first variable is detected by at least one first detecting device (121, 122), wherein the at least one first detecting device (121, 122) communicates both with the at least one first volume (V1) and also with the surroundings of the vehicle (V2), wherein the communications with the surroundings takes place by means of compensation means (DAE), **characterized in that** the profile of the at least one first variable is compared with a target profile, wherein the target profile is dependent on the compensation means (DAE) and the result of the checking of the device (12) is determined depending on the comparison.

2. Method according to Claim 1,
**characterized in that**
at least one second variable is detected, wherein the at least one second variable represents a pressure and/or a volume and/or a change of pressure and/or change of volume in the at least one first volume (V1) and the at least one first variable is verified by means of the at least one second variable, in particular using at least one state equation for ideal fluids and/or the at least one first variable is correlated with the at least one second variable and the result of the checking of the device (12) is determined depending on the verification and/or the correlation.

3. Method according to Claim 1 or 2, **characterized in that** the at least one first variable is detected by a first detecting device (121) and the at least one second variable is detected by a second detecting device (122), wherein the first and second detecting devices (122) are separate detecting devices (122) and the first detecting device (121) and the second detecting device (122) each communicate with the at least one first volume (V1).

4. Method according to any one of the preceding claims, **characterized in that**
at least one third variable is detected, wherein the at least one third variable represents a pressure and/or a change of pressure and/or a temperature and/or a change of temperature, in particular of the surroundings of the vehicle (V2), and/or the third variable represents an altitude at which the vehicle (1) is located and/or a change of altitude that the vehicle (1) carries out, wherein the at least one third variable is detected by a third detecting device, in particular by a separate third detecting device, and the at least one first variable and/or the at least one second variable are correlated with the at least one third variable and the result of the check is determined depending on the correlation.

5. Method according to Claim 4,
**characterized in that**
a correction factor is used on the at least one first variable and/or on the at least one second variable, wherein the correction factor is dependent on the at least one third variable.

6. Method according to any one of the preceding claims,
**characterized in that**
a leak and/or a blockage of the at least one first volume (V1) is determined as the result of the check.

7. Method according to Claim 6,
**characterized in that**
the leak and/or the blockage are determined if the at least one first variable and/or the at least one second variable do not correlate with the at least one third variable within a predetermined range (k1, k2).

8. Method according to Claim 7,
**characterized in that**
the at least one first variable and/or the at least one second variable correlate with the at least one third variable if the at least one first variable and/or the at least one second variable essentially have a predetermined relationship to the at least one third variable after a predetermined period of time (k2) has elapsed, wherein the period of time in particular depends on the at least one third variable and/or the compensation means (DAE).

9. Device with means for carrying out a method according to any one of Claims 1 through 8.

## Revendications

1. Procédé de vérification d'un dispositif (12) destiné à un véhicule (1) pour la détection d'une collision, en particulier d'une collision avec un piéton, au moyen d'au moins un moyen de détection de collision basé sur au moins un premier volume (V1), en particulier basé sur au moins un tuyau flexible (123),
dans lequel au moins une première grandeur est détectée, dans lequel ladite au moins une première grandeur une première grandeur représente une pression et/ou un volume et/ou une variation de pression et/ou une variation de volume dans le premier volume (V1) et un résultat de la vérification du dispositif est déterminé en fonction d'une évolution de ladite au moins une première grandeur, dans lequel ladite au moins une première grandeur est détectée au moyen d'au moins un premier dispositif de détection (121, 122), ledit au moins un premier dispositif de détection (121, 122) communiquant aussi bien avec ledit au moins un premier volume (V1) qu'avec un environnement du véhicule (V2),
dans lequel la communication avec l'environnement est effectuée à l'aide d'un moyen d'équilibrage (DAE), **caractérisé en ce que** l'évolution de ladite au moins une première grandeur est comparée avec une évolution de consigne, l'évolution de consigne dépendant du moyen d'équilibrage (DAE) et **en ce que** le résultat de la vérification du dispositif (12) est déterminé en fonction de la comparaison.

2. Procédé selon la revendication 1, **caractérisé en ce qu'**au moins une deuxième grandeur est détectée, ladite au moins une deuxième grandeur représentant une pression et/ou un volume et/ou une variation de pression et/ou une variation de volume dans ledit au moins un premier volume (V1) et ladite au moins une première grandeur est plausibilisée au moyen de ladite au moins une deuxième grandeur, en particulier en utilisant au moins une équation d'état pour des fluides parfaits et/ou **en ce que** ladite au moins une première grandeur est corrélée avec ladite au moins une deuxième grandeur et le résultat de la vérification du dispositif (12) est déterminé en fonction de la plausibilisation et/ou de la corrélation.

3. Procédé selon la revendication 1 ou 2, **caractérisé en ce que** ladite au moins une première grandeur est détectée au moyen d'un premier dispositif de détection (121) et ladite au moins une deuxième grandeur est détectée au moyen d'un deuxième dispositif de détection (122), le premier et le deuxième dispositif de détection (122) étant des dispositifs de détection séparés (122) et le premier dispositif de détection (121) et le deuxième dispositif de détection (122) communiquant respectivement avec ledit au moins un premier volume (V1).

4. Procédé selon l'une quelconque des revendications précédentes, **caractérisé en ce qu'**au moins une troisième grandeur est détectée, ladite au moins une troisième grandeur représentant une pression et/ou une variation de pression et/ou une température et/ou une variation de température, en particulier de l'environnement du véhicule (V2), et/ou la troisième grandeur représentant une hauteur, à laquelle le véhicule (1) se trouve et/ou une variation de hauteur, que le véhicule (1) opère, ladite au moins une troisième grandeur étant détectée au moyen d'un troisième dispositif de détection, en particulier au moyen d'un troisième dispositif de détection séparé, et **en ce que** ladite au moins une première grandeur et/ou ladite au moins une deuxième grandeur sont corrélées avec ladite au moins une troisième grandeur et **en ce que** le résultat de la vérification est déterminé en fonction de la corrélation.

5. Procédé selon la revendication 4, **caractérisé en ce qu'**un facteur de correction est appliqué à ladite au moins une première grandeur et/ou à ladite au moins une deuxième grandeur, le facteur de correction dépendant de ladite au moins une troisième grandeur.

6. Procédé selon l'une quelconque des revendications précédentes, **caractérisé en ce qu'**en tant que résultat de la vérification une fuite et/ou une obstruction dudit au moins un premier volume (V1) sont déterminées.

7. Procédé selon la revendication 6, caractérisé en ce la fuite et/ou l'obstruction sont déterminées lorsque ladite au moins une première grandeur et/ou ladite au moins une deuxième grandeur ne corrèle(nt) pas dans un cadre prédéterminé (k1, k2) avec ladite au moins une troisième grandeur.

8. Procédé selon la revendication 7, **caractérisé en ce que** ladite au moins une première grandeur et/ou ladite au moins une deuxième grandeur corrèle(nt) avec ladite au moins une troisième grandeur, lorsque, après l'expiration d'une période de temps prédéterminée (k2), la période de temps dépendant en particulier de ladite au moins une troisième grandeur et/ou du moyen d'équilibrage (DAE), ladite au moins une première grandeur et/ou ladite au moins une deuxième grandeur se trouve(nt) essentiellement dans un rapport prédéterminé vis-à-vis de ladite au moins une troisième grandeur.

9. Dispositif muni de moyens pour la mise en oeuvre d'un procédé selon l'une quelconque des revendications 1 à 8.
